(19) Europäisches Patentamt
European Patent Office
Office européen des brevets

(11) **EP 3 640 135 A1**

(12) **EUROPEAN PATENT APPLICATION**

(43) Date of publication:
**22.04.2020 Bulletin 2020/17**

(51) Int Cl.:
**B64C 27/08** *(2006.01)*    **B64C 27/20** *(2006.01)*
**B64C 39/00** *(2006.01)*    **B64C 39/02** *(2006.01)*
**G05D 1/08** *(2006.01)*

(21) Application number: **19200410.9**

(22) Date of filing: **30.09.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.10.2018   JP 2018195838**

(71) Applicant: **FUJITSU LIMITED
Kanagawa 211-8588 (JP)**

(72) Inventor: **Izutsu, Masaki
Kanagawa, 211-8588 (JP)**

(74) Representative: **Hoffmann Eitle
Patent- und Rechtsanwälte PartmbB
Arabellastraße 30
81925 München (DE)**

(54) **FLYING DEVICE**

(57)    A flying device includes a device body, plural propellers disposed at a front, rear, left, and right of the device body, plural propeller motors fixed to the device body and configured to rotate the plural propellers about an axis perpendicular to the device body, a disc disposed at a central portion of the device body, and a disc motor fixed to the device body and configured to rotate the disc about an axis perpendicular to the device body.

FIG. 1

**Description**

FIELD

Technology disclosed herein relates to a flying device.

BACKGROUND

Recently, proposals have been made for flying devices equipped with plural propellers disposed at a front, rear, left, and right of a device body, and plural propeller motors configured to rotate the plural propellers about an axis perpendicular to a device body (see, for example, Patent Document 1).

*Related Patent Documents*

Patent Document 1: Japanese Patent Application Laid-Open (JP-A) No. 2017-74804
Patent Document 2: JP-ANo. 2016-135660

Generally in such flying devices, the device body turns about a yaw axis by generating a difference in rotational speeds of the plural propellers. However, in order for the device body to maintain a constant height when turning about such a yaw axis, the thrust-to-weight ratio of the plural propellers needs to be increased. There is thus a concern that the device body could become unstable when turning about a yaw axis.

Patent Documents 1 and 2 disclose flying devices provided with a propeller at a central portion of a device body. However, there is no discussion regarding stabilizing the device body when turning about a yaw axis.

SUMMARY

As an aspect of the technology disclosed herein, an object is to provide a flying device capable of stably turning a device body about a yaw axis.

According to an aspect of the embodiments, a flying device includes a device body, plural propellers disposed at a front, rear, left, and right of the device body, plural propeller motors fixed to the device body and configured to rotate the plural propellers about an axis perpendicular to the device body, a disc disposed at a central portion of the device body, and a disc motor fixed to the device body and configured to rotate the disc about an axis perpendicular to the device body.

BRIEF DESCRIPTION OF DRAWINGS

Fig. 1 is a perspective view illustrating a flying device according to an exemplary embodiment;
Fig. 2 is a plan view illustrating the flying device in Fig. 1;
Fig. 3 is a lower plan view illustrating the flying device in Fig. 1;
Fig. 4 is a side view illustrating the flying device in Fig. 1;
Fig. 5 is a block diagram illustrating an electrical configuration of the flying device in Fig. 1;
Fig. 6 is a diagram illustrating a first example of flight along a target surface by the flying device in Fig. 1; and
Fig. 7 is a diagram illustrating a second example of flight along target surfaces by the flying device in Fig. 1.

DESCRIPTION OF EMBODIMENTS

Explanation follows regarding an exemplary embodiment of technology disclosed herein.

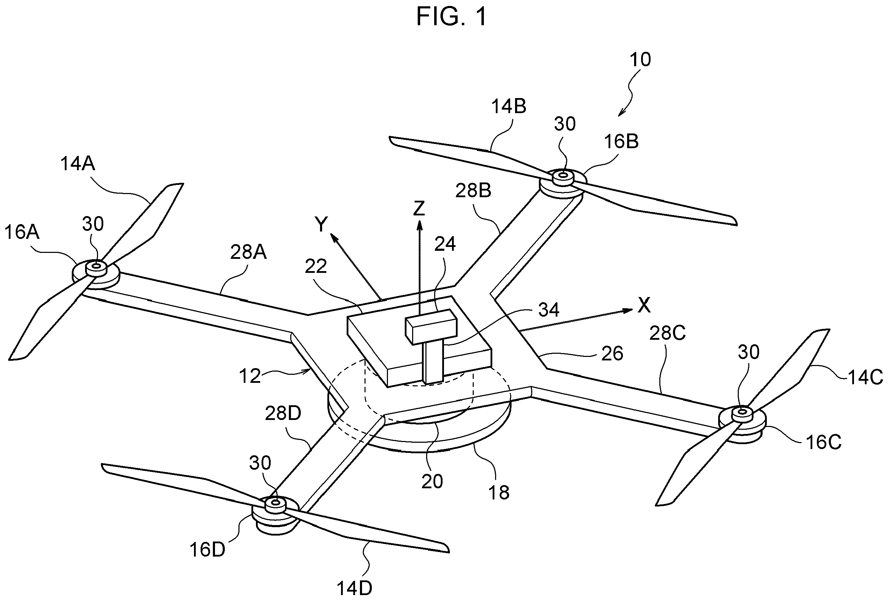

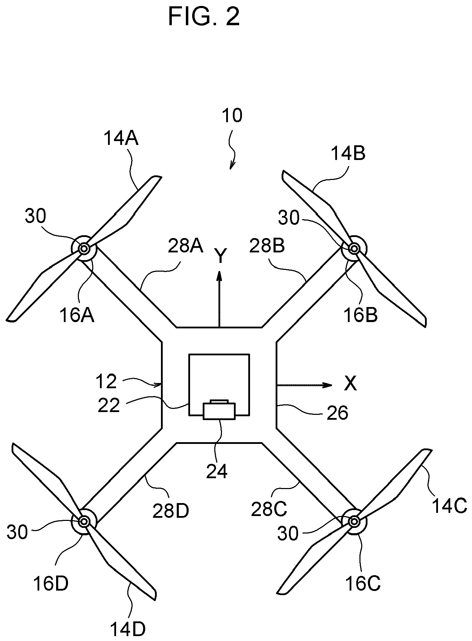

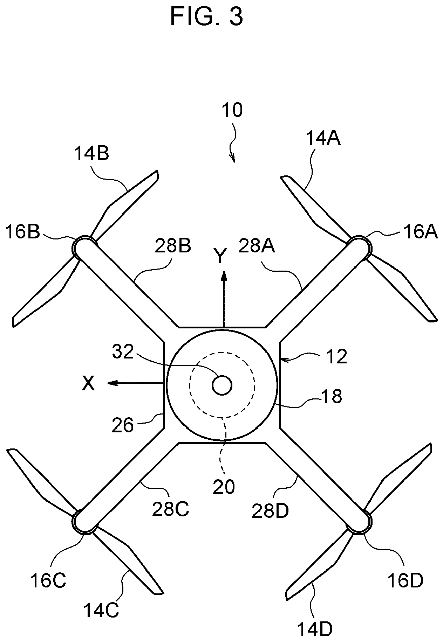

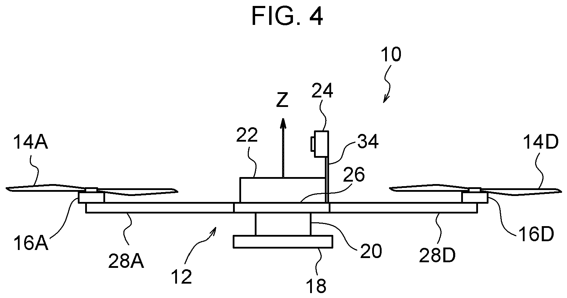

A flying device 10 according to the present exemplary embodiment illustrated in Fig. 1 to Fig. 4 is what is commonly referred to as drone. The flying device 10 includes a device body 12, plural propellers 14A to 14D, plural propeller motors 16A to 16D, a disc 18, a disc motor 20, a controller 22, and a detector 24.

The device body 12 includes a main body 26 forming a central portion of the device body 12, and plural arms 28A to 28D extending from the main body 26. As an example, the main body 26 is formed in a square shape in plan view. The arm 28A extends from the main body 26 toward the front left of the device body 12, and the arm 28B extends from the main body 26 toward the front right of the device body 12. The arm 28C extends from the main body 26 toward the rear right of the device body 12, and the arm 28D extends from the main body 26 toward the rear left of the device body 12.

The X axis, Y axis, and Z axis in Fig. 1 to Fig. 4 respectively correspond to a pitch axis, a roll axis, and a yaw axis of the device body 12. The direction indicated by the arrow on the X axis corresponds to the right of the device body 12, the direction indicated by the arrow on the Y axis corresponds to the front of the device body 12, and the direction indicated by the arrow on the Z axis corresponds to the upper side of the device body 12.

The plural propeller motors 16A to 16D are fixed to respective upper faces of leading end portions of the plural arms 28A to 28D. Each of the plural propeller motors 16A to 16D includes an output shaft 30 extending in an axis perpendicular to the device body 12. The axis perpendicular to the device body 12 runs parallel to the Z axis. The output shafts 30 extend toward the upper side of the device body 12.

The plural propellers 14A to 14D are fixed to the respective output shafts 30 of the plural propeller motors 16A to 16D. The plural propellers 14A to 14D and the plural propeller motors 16A to 16D are provided at the leading end portions of the plural arms 28A to 28D so as to be disposed at the front, rear, left, and right of the device body 12. The plural propellers 14A to 14D and the plural propeller motors 16A to 16D are each disposed at the upper side of the device body 12.

The plural propeller motors 16A to 16D rotate the plural propellers 14A to 14D about the axis perpendicular to the device body 12. More specifically, the propeller motors 16A, 16C rotate the propellers 14A, 14C in the same direction as each other, and the propeller motors 16B, 16D rotate the propellers 14B, 14D in the opposite direction to that of the propellers 14A, 14C.

The disc motor 20 is fixed to a lower face of the main body 26. The disc motor 20 includes a rotation shaft 32 extending in the axis perpendicular to the device body 12. The rotation shaft 32 extends toward the lower side of the device body 12. The disc 18 is disposed such that a plate thickness direction of the disc 18 runs in the axis perpendicular to the device body 12, and a leading end portion of the rotation shaft 32 is fixed to a central portion of the disc 18. The disc 18 is disposed at the central portion of the device body 12, and the center of rotation of the disc 18 is positioned on the yaw axis of the device body 12. The disc 18 is formed with a size that is not affected by wind generated when the plural propellers 14A to 14D rotate.

The disc 18 and the disc motor 20 are disposed at the lower side of the device body 12. The disc motor 20 is capable of rotating the disc 18 in two directions about the axis perpendicular to the device body 12 (clockwise or counterclockwise in plan view). When the disc 18 rotates, a force in the opposite direction to a rotation direction of the disc 18 (a reaction force) acts on the device body 12, thereby turning the device body 12 in the opposite direction to the rotation direction of the disc 18.

Note that thrust T acting on the device body 12 is found using the following Equation 1. Torque N during turning of the device body 12 is found using the following Equation 2.

$$T = F_1 + F_2 + F_3 + F_4 \qquad \text{Equation 1}$$

$$N = \tau_1 - \tau_2 + \tau_3 - \tau_4 + \tau_5 \qquad \text{Equation 2}$$

$F_1$, $F_2$, $F_3$, $F_4$ are the thrusts of the plural propellers 14A to 14D. $\tau_1$, $\tau_2$, $\tau_3$, $\tau_4$ are the torques of the plural propellers 14A to 14D, and $\tau_5$ is the torque of the disc 18. Since $\tau_1$ and $\tau_2$ cancel each other out, and $\tau_3$ and $\tau_4$ cancel each other out, the torque of the disc 18 acts on the device body 12.

The controller 22 is, for example, realized by an electronic circuit (computer) including a calculation device, a storage device, and the like. As an example, the controller 22 is fixed to an upper face of the main body 26. As described later, the controller 22 includes functionality to control the plural propeller motors 16A to 16D and the disc motor 20.

The detector 24 is disposed at the upper side of the main body 26. A stay 34 extending upward from the main body 26 is fixed to the main body 26, and the detector 24 is fixed to an upper end portion of the stay 34. For example, the detector 24 is configured to detect the condition of a vertical target surface positioned in front of the device body 12, and is disposed so as to face toward the front of the device body 12. Various detection devices, for example a camera or optical sensor, may be applied as the detector 24.

Electrical configuration of the flying device 10 according to the present exemplary embodiment and operation of the flying device 10 are described together below.

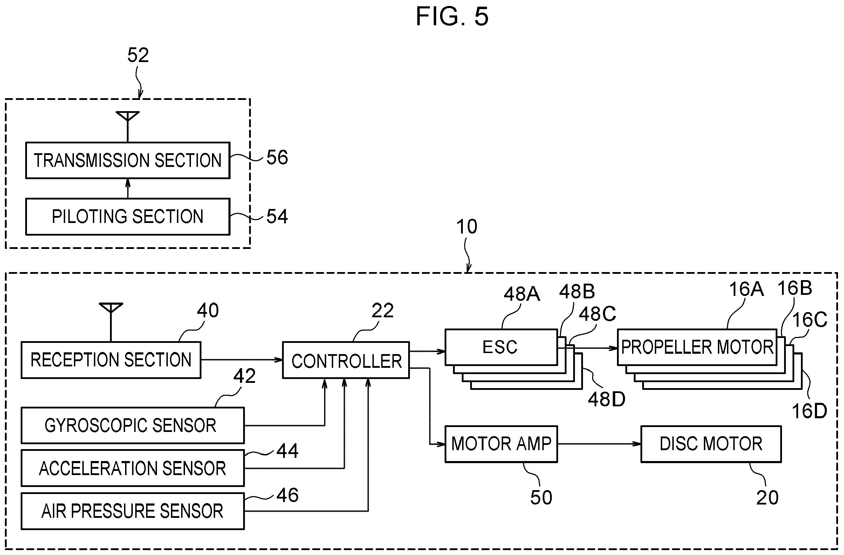

As illustrated in Fig. 5, the flying device 10 includes a reception section 40, a gyroscopic sensor 42, an acceleration sensor 44, an air pressure sensor 46, plural electrical speed controllers (ESC) 48A to 48D, and a motor amp 50. The flying device 10 is employed together with a piloting device 52.

The piloting device 52 includes a piloting section 54 and a transmission section 56. A signal corresponding to piloting of the piloting section 54 by a pilot is transmitted from the transmission section 56. The reception section 40 receives the signal transmitted from the transmission section 56 and outputs the received signal to the controller 22. The gyroscopic sensor 42 outputs a signal corresponding to the angular velocity of the device body 12 to the controller 22, and the acceleration sensor 44 outputs a signal corresponding to the acceleration of the device body 12 to the controller 22. The air pressure sensor 46 outputs a signal corresponding to the air pressure around the device body 12 to the controller 22.

The controller 22 outputs respective control signals to the plural ESCs 48A to 48D and the motor amp 50 based on the signals output from the reception section 40, the gyroscopic sensor 42, the acceleration sensor 44, and the air pressure sensor 46. The plural ESCs 48A to 48D activate the plural propeller motors 16A to 16D so as to rotate the plural propellers 14A to 14D at rotational speeds corresponding to the control signals output from the controller 22. The motor amp 50 actuates the disc motor 20 so as to rotate the disc 18 at a rotational speed corresponding to the control signal output from the controller 22 and in a rotation direction corresponding to the control signal.

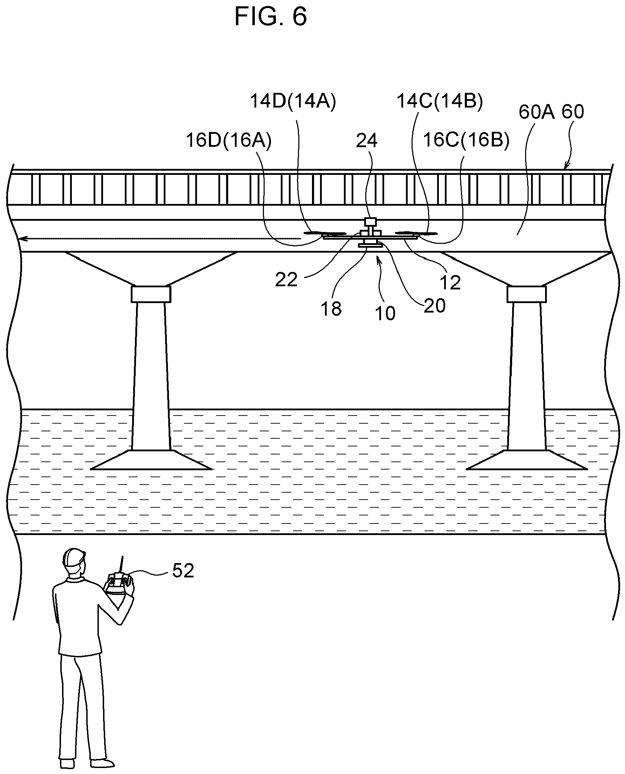

Fig. 6 illustrates an example in which the flying device 10 is moving horizontally along a side face 60A of a bridge beam 60, serving as an example of a target surface. In the example illustrated in Fig. 6, a pilot pilots using the piloting device 52 so as to move the flying device 10 horizontally in a state in which the device body 12 is face-to-face with the side face 60A in order to detect the condition of the side face 60A using the detector 24. However, when the flying device 10 moves horizontally in this manner, external turbulence or the like could cause a force about the yaw axis to act on the device body 12.

In such cases, the controller 22 controls the disc motor 20 to rotate the disc 18 so as to maintain the state in which the device body 12 is face-to-face with the side face 60A. Namely, in cases in which a force acting in a clockwise direction in plan view acts on the device body 12, the controller 22 controls the disc motor 20 so as to rotate the disc 18 in a clockwise direction. In cases in which a force acting in a counterclockwise direction in plan view acts on the device body 12, the controller 22 controls the disc motor 20 so as to rotate the disc 18 in a counterclockwise direction.

Rotating the disc 18 in this manner causes a force in the opposite direction to the rotation direction of the disc 18 (reaction force) to act on the device body 12, such that the device body 12 turns in an opposite direction to the rotation direction of the disc 18. The device body 12 is thus maintained in the state face-to-face with the side face 60A.

As described above, during rotation of the disc 18, the controller 22 controls the plural propeller motors 16A to 16D such that the rotational speeds of the plural propellers 14A to 14D remain constant. Since the thrusts of the plural propellers 14A to 14D remain constant, the device body 12 maintains a constant height. The flying device 10 therefore moves horizontally while maintaining a constant height in a state in which the device body 12 is face-to-face with the side face 60A of the bridge beam 60.

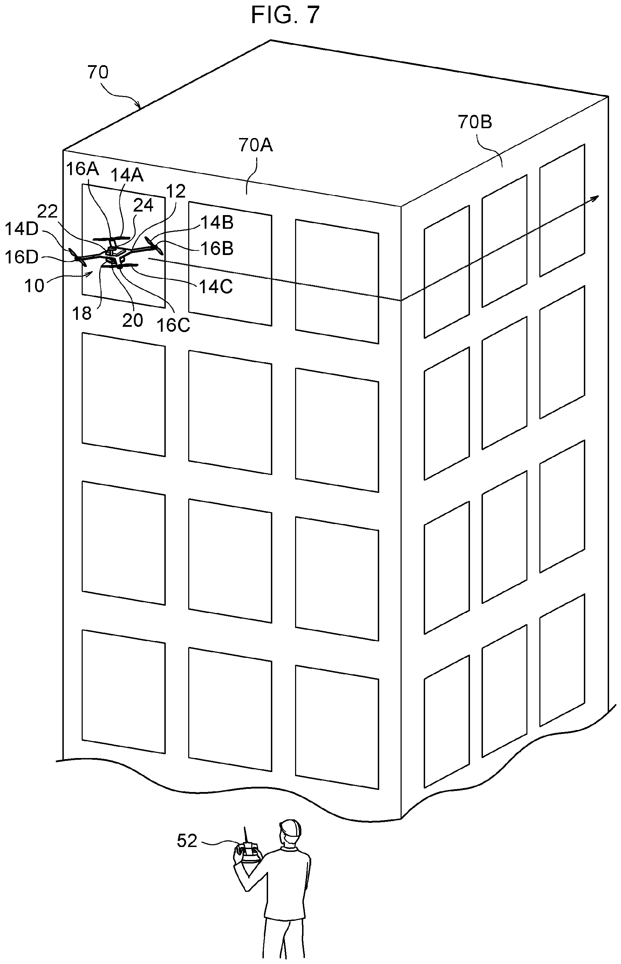

Fig. 7 illustrates an example in which the flying device 10 is moving horizontally along a first side face 70A and a second side face 70B of a building 70, serving as target surfaces. The first side face 70A and the second side face 70B of the building 70 are, for example, at right angles to each other.

In the example illustrated in Fig. 7, the pilot pilots using the piloting device 52 so as to move the flying device 10 horizontally in states in which the device body 12 is face-to-face with the side face 70A and then the second side face 70B in order to sequentially detect the condition of the side face 70A and the second side face 70B using the detector 24. However, when the flying device 10 moves from the first side face 70A to the second side face 70B in order to place the device body 12 in the respective states face-to-face with the side face 70A and then the second side face 70B, the device body 12 needs to turn about its yaw axis.

When the flying device 10 moves from the first side face 70A to the second side face 70B, the controller 22 controls the disc motor 20 to rotate the disc 18 so as to maintain the device body 12 in the respective states face-to-face with the first side face 70A and then the second side face 70B. Namely, when the flying device 10 moves from the first side face 70A to the second side face 70B, the controller 22 controls the disc motor 20 such that the disc 18 rotates clockwise. When the disc 18 rotates clockwise in this manner, a counterclockwise force in the opposite direction to the rotation direction of the disc 18 acts on the device body 12, such that the device body 12 turns counterclockwise. The state in which the device body 12 is face-to-face with the second side face 70B is thus maintained as the flying device 10 moves along the second side face 70B.

As described above, during rotation of the disc 18, the controller 22 controls the plural propeller motors 16A to 16D such that the rotational speeds of the plural propellers 14A to 14D remain constant. The thrusts of the plural propellers 14A to 14D are thus held steady, such that the device body 12 is maintained at a constant height. In this manner, the flying device 10 moves horizontally while maintaining a constant height in the respective states in which the device body 12 is face-to-face with the first side face 70A and then the second side face 70B of the building 70.

Note that similar applies when the flying device 10 moves from the second side face 70B to the first side face 70A. Namely, when the flying device 10 moves from the second side face 70B to the first side face 70A, the controller 22 controls the disc motor 20 so as to rotate the disc 18 counterclockwise. When the disc 18 rotates counterclockwise in this manner, a clockwise force in the opposite direction to the rotation direction of the disc 18 acts on the device body 12, such that the device body 12 turns clockwise. The device body 12 is thus maintained in a state face-to-face with the first side face 70A as the flying device 10 moves along the first side face 70A.

Explanation follows regarding operation and advantageous effects of the present exemplary embodiment.

As described in detail above, in the flying device 10 according to the present exemplary embodiment, the disc 18 is disposed at the central portion of the device body 12. When the disc 18 rotates, a force in the opposite direction to the rotation direction of the disc 18 (reaction force) acts on the device body 12, enabling the device body 12 to be turned in the opposite direction to the rotation direction of the disc 18. Since the disc 18 is rotated independently of the plural propellers 14A to 14D during turning of the device body 12, the thrusts of the plural propellers 14A to 14D can be held steady during turning of the device body 12. This enables the device body 12 to be turned stably about its yaw axis.

The plural propellers 14A to 14D are disposed at the upper side of the device body 12, and the disc 18 is disposed at the lower side of the device body 12. Accordingly, placement spaces for the plural propellers 14A to 14D and the disc 18 can be easily secured, enabling degrees of freedom for the shape of the flying device 10 to be secured, and also enabling a reduction in the size of the flying device 10.

Explanation follows regarding modified examples of the present exemplary embodiment.

In the exemplary embodiment described above, the number of the plural propellers 14A to 14D is four. However, a number other than four propellers may be provided.

In the exemplary embodiment described above, the disc 18 is disposed at the lower side of the 12. However, the disc 18 may be disposed at any position as long as the center of rotation of the disc 18 is positioned on the yaw axis of the device body 12.

In the exemplary embodiment described above, the flying device 10 includes the detector 24. However, the detector 24 may be omitted.

In the exemplary embodiment described above, the controller 22 holds the rotational speeds of the plural propellers 14A to 14D steady when the disc 18 is rotated to turn the device body 12. However, the rotational speeds of the plural propellers 14A to 14D may be adjusted to assist turning of the device body 12 accompanying the rotation of the disc 18.

Although explanation has been given regarding an exemplary embodiment of technology disclosed herein, the technology disclosed herein is not limited to the above, and obviously various other modifications may be implemented within a range not departing from the spirit of the technology disclosed herein.

**Claims**

1. A flying device (10) comprising:

   a device body (12);
   a plurality of propellers (14A to 14D) disposed at a front, rear, left, and right of the device body (12);
   a plurality of propeller motors (16A to 16D) fixed to the device body (12) and configured to rotate the plurality of propellers (14A to 14D) about an axis perpendicular to the device body (12);
   a disc (18) disposed at a central portion of the device body (12); and
   a disc motor (20) fixed to the device body (12) and configured to rotate the disc (18) about an axis perpendicular to the device body (12).

2. The flying device (10) of claim 1, further comprising a controller (22) configured to control the disc motor (20) such that the device body (12) turns in an opposite direction to a rotation direction of the disc (18).

3. The flying device (10) of claim 2, wherein the controller (22) is configured to control the disc motor (20) such that the device body (12) turns in the opposite direction to the rotation direction of the disc (18) while maintaining control of the plurality of propeller motors (16A to 16D) such that rotational speeds of the plurality of propellers (14A to 14D) remain constant.

4. The flying device (10) of any one of claim 1 to claim 3, wherein:

   the plurality of propellers (14A to 14D) are disposed at an upper side of the device body (12); and
   the disc (18) is disposed at a lower side of the device body (12).

5. The flying device (10) of any one of claim 1 to claim 4, wherein a center of rotation of the disc (18) is positioned on a yaw axis of the device body (12).

6. The flying device (10) of any one of claim 1 to claim 5, wherein the disc motor (20) is capable of rotating the disc

EP 3 640 135 A1

(18) in two directions.

6

FIG. 1

EP 3 640 135 A1

# FIG. 2

FIG. 3

FIG. 4

FIG. 5

## FIG. 6

# FIG. 7

Europäisches
Patentamt

European
Patent Office

Office européen
des brevets

# EUROPEAN SEARCH REPORT

Application Number

EP 19 20 0410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 269 640 A1 (KOREA AEROSPACE RES INST [KR]) 17 January 2018 (2018-01-17) | 1,4-6 | INV. B64C27/08 B64C27/20 B64C39/00 B64C39/02 G05D1/08 |
| Y | * the whole document * | 2,3 | |
| | ----- | | |
| X | BUCKI NATHAN ET AL: "Improved Quadcopter Disturbance Rejection Using Added Angular Momentum", 2018 IEEE/RSJ INTERNATIONAL CONFERENCE ON INTELLIGENT ROBOTS AND SYSTEMS (IROS), IEEE, 1 October 2018 (2018-10-01), pages 4164-4170, XP033491394, DOI: 10.1109/IROS.2018.8594109 [retrieved on 2018-12-27] | 1,4-6 | |
| Y | * the whole document * | 2,3 | |
| | ----- | | |

TECHNICAL FIELDS
SEARCHED (IPC)

B64C
G05D
F16C

The present search report has been drawn up for all claims

| Place of search | Date of completion of the search | Examiner |
|---|---|---|
| Munich | 10 December 2019 | Bianchi, Cristiano |

EPO FORM 1503 03.82 (P04C01)

## ANNEX TO THE EUROPEAN SEARCH REPORT
## ON EUROPEAN PATENT APPLICATION NO.

EP 19 20 0410

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2019

| Patent document cited in search report | | Publication date | Patent family member(s) | | Publication date |
|---|---|---|---|---|---|
| EP 3269640 | A1 | 17-01-2018 | CN | 107531325 A | 02-01-2018 |
| | | | EP | 3269640 A1 | 17-01-2018 |
| | | | KR | 101565979 B1 | 13-11-2015 |
| | | | US | 2018105266 A1 | 19-04-2018 |
| | | | WO | 2016167413 A1 | 20-10-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017074804 A
- JP 2016135660 A